# EUROPEAN PATENT SPECIFICATION

(11) **EP 3 638 642 B1**
(45) Date of publication and mention of the grant of the patent: **11.12.2024**
(21) Application number: 18737989.6
(22) Date of filing: 12.06.2018
(51) Int. Cl.: C05G 3/00

(54) **MULTILAYER HYDROREPELLENT SYSTEMS WITH CONTROLLED RELEASE OF ACTIVE AGENTS IN WATER AND SOIL**
MEHRSCHICHTIGE WASSERABWEISENDE SYSTEME MIT KONTROLLIERTER FREISETZUNG VON WIRKSTOFFEN IN WASSER UND BODEN
SYSTÈMES HYDROFUGES MULTICOUCHE À LIBÉRATION CONTRÔLÉE DE PRINCIPES ACTIFS DANS L'EAU ET LE SOL

(30) Priority: 12.06.2017 IT 201700064875
(43) Date of publication of application: 22.04.2020
(73) Proprietor: Sicit Group S.p.A., 36072 Chiampo VI (IT)
(72) Inventor: ASNICAR, Manuel, 36054 Montebello Vicentino (Vicenza) (IT); PALUGAN, Luca, 20020 Magnago MI (IT); PRIANTE, Fernando, 36015 Schio VI (IT); CEREA, Matteo, 24064 Brunello Del Monte BG (IT); PITUELLO, Chiara, 36100 Vicenza (IT); NERESINI, Massimo Costantino, Arzignano (VI) Cap 36071 (IT)
(74) Representative: Predazzi, Valentina
(86) International application number: PCT/IB2018/054236
(87) International publication number: WO 2018/229648

(56) References cited:
- EP-A1- 0 661 250
- WO-A1-2017/157922
- WO-A1-98/37039
- CN-A- 105 646 109
- US-A- 3 295 950
- US-A- 3 475 154
- US-A- 5 464 633

## Description

### Technical field of the invention

The invention relates to formulations for controlled release both in water and in soils, and to the components and processes that enable effective coating of cores in various forms. The technology used for implementing the invention, i.e., multilayer coating of cores with the addition of various additives and active ingredients, enables modulation of release of the active ingredients in the desired times and modes. Release is adjusted according to the desired targets. The technology does not use any organic solvent, but is based upon a thermodynamic technology that uses the phase transitions through control of the heat introduced into or removed from the system.

The invention uses low-cost compounds, mostly of natural derivation and in any case biodegradable. Hence, the materials and technology necessary for implementing the present invention have a low environmental impact.

### Prior art

There has been known for years the effort of manufacturers of fertilisers and other technical products used in agriculture, such as pesticides, herbicides, or fungicides, etc. to find new instruments for adjusting the release of the products in the water and hence reduce the pollutant effect on the environment over time.

The constant search for high-efficiency products imposes the need to abandon the idea of a product that is spread in large amounts with consequent waste and low efficiency in favour of products with higher levels of performance and a higher degree of control that enable a moderate use thereof.

Completely soluble products and biostimulants with immediate effect are increasingly important in the industrial, technical, and agronomic panorama. However, the limit of these products is their low persistence in the soils or in the environments where they are applied on account of their high compatibility with water and hence their fast dispersion in the environment.

Some prior studies forming the subject of patent literature propose granulated soluble nutrients coated with one or more layers of biodegradable polymeric material (see, for example, US5849060, EP0661250, US3475154, US3295950).

There is known the existence on the market of mineral products, and coated slow-release fertilisers. See the site:
*http:*//*www.haifa-group.com*/*Italian*/*products*/*plant_nutrition*/*controlled release fertilizers*/

In this sense, the product that has encountered the *greatest* degree of success uses the patented technology OSMOCOTE^{®}.

Osmocote technology or the like proposes a method of coating that is sufficiently porous to promote an osmotic mechanism of release of the nutrients. The technology is described and protected, for example, by the following patents: EP0628527-A, US5652196, EP0628527, US4657576.

The use of organic biostimulants in agriculture is limited to fertigation (i.e., fertilisation during irrigation) and to leaf fertilisation. In fact, it is well known that the use of active ingredients/fertilisers in the soil raises problems of run-off and fast loss of the nutrient.

Attempts of formulations with a single coating layer have proven unsatisfactory since they are characterized by a low capacity of control of release of the active ingredients and hence by a limited adaptability of release to the requirements of the specific crops to be treated. In other words, monolayer products according to the prior art do not enable "personalised" treatment of the crop in respect to specific circumstances or conditions of growth.

Biostimulants are amongst the first instruments used by man in agriculture. However, little has been done over the years to refine and improve their quality and effectiveness. In the last ten years, a growing amount of research has been undertaken by manufacturers of biostimulants to identify new bioactive compounds and to better understand the impact of these compounds on the crops and the quality of the agricultural products in a wide range of environmental conditions of growth.

Falling in this panorama is the activity of research of the present inventors, the first aim of which was to obtain an optimal system of release in the soil that would adapt to the needs of the specific crops in their specific context, namely, a system or a structure that would enable the controlled release, preferably delayed, of soluble active products, such as biostimulants and/or fertilisers for use in agriculture, products that otherwise would be released in a non-calibrated way.

### Summary of the Invention

The present invention is based upon the discovery that the use of multilayer-coating systems, obtained through a thermodynamic-coating technology using particular materials, enables the desired result to be achieved; namely, a composite structure is obtained that enables the controlled and/or delayed release of active products, in water and in the soil. This effect is achieved since the treatment according to the invention reduces the hygroscopicity of the active products rendering them at least moderately water-repellent.

Consequently, the subjects of the present invention are the following:
- A coated product for the controlled release of soluble active ingredients of agronomic and agricultural interest in water or in soil, characterized in that it comprises a core consisting of or containing one or more active ingredients, said core being coated with at least one outer layer for control of the release of the active ingredient or of the mixture of active ingredients and a number n of additional coating layers, where n may be 0, 1, 2, 3, 4, or 5, and where at least one layer comprises one or more canalizing agents that determine the rate of release of the active ingredient or ingredients, wherein said canalizing agents are protein hydrolysates and wherein said layer for control of release comprises a non-water-soluble or water-repellent low-melting material chosen from waxes.
- A method for preparing the products according to the invention, comprising at least the following steps:
   - heating the cores consisting of or comprising the active ingredient or ingredients;
   - coating the cores with a coating material in molten form;
   - cooling the cores thus coated; and
   - repeating the entire cycle n times, with n ranging from 2 to 5, to obtain a granule with n+1 layers that coat the core; and
   - Use of the product according to the invention for enhancing the yield and the quality of crops and/or for enhancing the quality of the soils.

### Advantages

Through the use of this technology it is possible to use coating materials of different chemico-physical nature; for example, the first layer could be a wax, the second a polymer, the third a wax or a different compound. As a result, release of the individual active ingredients can be modulated by different parameters, for example the environmental conditions, such as temperature, humidity, precipitations, pH of the soil, microbial mass of the soil, species of micro-organisms present in the soil, salinity, and other parameters linked to the type of soil.

The method described in the invention can also be used for reducing the hygroscopicity of the organic fertilisers and other products of agricultural interest and obtaining in this way products of higher commercial value since they are less subject to clumping, crushing and flow resistant.

According to the invention, it is possible to adjust the resistance of the layers both through the appropriate choice of the materials and through the thickness of the layer, which by recourse to "doping" of the materials used by addition of dispersed canalizing agents - i.e., additives added to the formulation that have the purpose of shortening or lengthening the release, and hence of modulating it (a technology in itself known, but not in applications of this sort).

The multilayer technology used in the present invention enables different active components to be set between the various coating layers, thus obtaining a release in differentiated times and modes. For instance, if a salt or an enzyme, or a specific component is deposited between the second and third layers, this substance will be released individually in a time that is linked to the thickness and to the chemico-physical composition of the third layer (the outermost layer).

Multilayer technology hence enables the release of individual and different active components at different times, enabling use in one and the same formulation even of agents that are theoretically incompatible with one another or components that are not synergistic.

Consequently, the technology used enables levels of release to be obtained with a flexibility that a monolayer system would not have and would not allow.

Finally, an advantage of the present invention is represented by the fact that the use of any organic solvent is deliberately avoided; hence, it is implemented with *solvent-free* technology.

### Description of the drawings

Figure 1: is a schematic representation exemplifying a structure according to the invention. The core is coated with three layers of different composition: 1) smoothing-thickening layer; 2) reinforcement layer; and 3) control layer. All the layers contribute to guaranteeing an effect of delayed release.

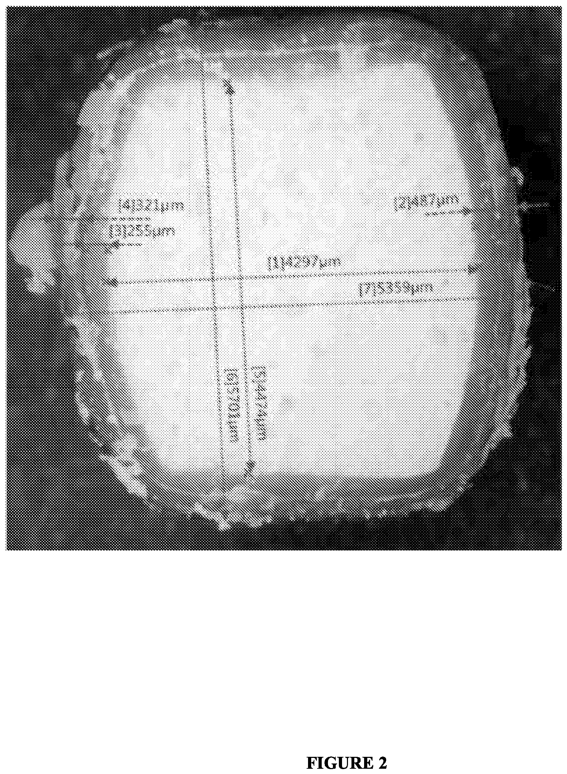

Figure 2: is a microscope photo of a section of a triple-layer coated tablet. There may be noted the thick green layers (control and smoothing layers) and the light fine layer (reinforcement polymer) approximately half-way between the two layers.
Figure 3: is a graph illustrating the profiles of release in water of the active ingredient by the products SICIT 61 (without canalizing agents) and SICIT 65 (with canalizing agents) compared to the commercial slow-release product Tablet NR.
Figure 4: is a graph illustrating the profiles of release in water of the active ingredient by the products SICIT 84 and SICIT 83 compared to SICIT 83 (without canalizing agents) and to the commercial product Tablet Lot 1.
Figure 5: is a graph that sets in comparison the profiles of release of the products SICIT 36 and GS 410 (fast-release) with the profile of release SICIT 83 without canalizing agents and with GS 412 (delayed-release).

### DETAILED DESCRIPTION OF THE INVENTION

### Products of the invention

The present invention makes it possible to obtain coated products with controlled release of any active ingredient of agronomic interest and in general agricultural interest, especially biostimulants. By "coated products" we mean formulations or compositions of substances having a layered or multilayered structure.

By "controlled release of the active ingredients" we mean a release modulated over time, for example, a slower and longer release than what can be obtained in the absence of the layered structure according to the invention. Delayed release is able to minimise the loss of active ingredients/fertilisers as a result of them being washed away by rain water or irrigation water, increasing the efficiency of use and reducing the environmental impact. The possibility of reducing the rate of release of biostimulants during the initial steps of growth of the plant renders possible synchronisation of application of the aforesaid substances with the demand of the plant during growth. Delayed release moreover enables reduction of costs and reduction in the frequency of application, at the same time increasing operator safety.

### Active ingredients of the invention

Examples of active ingredients that can be prepared in multilayer formulations are biostimulants, fertilisers, phytotherapeutic drugs, pesticides, fungicides, herbicides, plant hormones, growth factors, enzymes, etc. Biostimulants represent, however, the preferred embodiment of the invention.

### Biostimulants

In the field of treatment of crops with fertilisers, the use of biostimulants has demonstrated the possibility of increasing the production yield. By the term "agricultural biostimulant" we mean any agent, active ingredient, compound, formulation of compounds, substance, or other products of natural derivation, whether vegetable or animal, which, when applied to plants or soils, improves the physiological processes of germination, growth, and ripening, thus rendering these processes more efficient.

Biostimulants improve the efficiency of the metabolism of the plant, inducing an increase in the production and quality of the crop. They increase the tolerance of the plant and the recovery from abiotic stresses. They facilitate assumption, translocation, and use of the nutrients. They improve the quality of the products, including the sugar contents, colour, size, and amount of fruit. They improve the water balance of the plant. Finally, they improve some physico-chemical properties of the soil and favour development of complementary micro-organisms in the soil.

By way of example, there may be indicated, as biostimulants, or phytostimulants, protein hydrolysates, peptides, mixtures of protein hydrolysates (of animal origin, vegetable origin, or ones coming from processing of fish), products of vegetable origin, humic substances, extracts of marine algae, vegetable extracts containing phyto-hormones, micro-organisms, macro-organisms, micro-elements, meso-elements, and macro-elements.

By "micro-elements" we mean additional elements such as salts of metals (e.g., boron, cobalt, copper, iron, manganese, molybdenum, zinc) that complete the formulation in a quantity of less than 0.1% w/w. By "meso-elements" or "secondary elements" we mean elements such as magnesium, calcium, sodium, sulphur. By "macro-elements" or "main elements of fertility" we mean elements such as nitrogen, phosphorus, and potassium, which participate in the formulation with percentages higher than 0.1%.

This distinction between the three elements is based upon the definition of the Italian law on fertilisers.

### Cores

The system proposed by the invention consists in solid cores of spherical or pseudo-spherical shape, e.g., granules, pellets, or tablets, which are coated with a number of membranes that are able to limit diffusion of the active ingredients in aqueous fluids. Said cores consist of or contain the active ingredient or the mixtures of active ingredients, for example one or more biostimulants consisting of a mixture of amino acids, oligopeptides, and peptides, or a protein hydrolysate, or else vegetable extracts. The final coated particles may be considered multilayer microcapsules.

The cores that contain the active substance can be prepared by means of any known technique for the production of particulates, such as the techniques that envisage drying of solutions, or else compacting of powders. Technologies of spray-drying, prilling, granulation, pelletising, extrusion, or compression of mixtures containing the active substances possibly mixed with appropriate excipients and/or additives may be used.

In the spray-drying technique, the active substances are solubilised or suspended in a solubilising or suspending carrier, preferably water, and the solution/suspension is nebulized in an environment that favours instantaneous drying of the solutions/suspensions so as to obtain evaporation of the drops of the liquid means and solidification of the solute/dispersate in the form of powder or granules.

In the prilling technology, the solutions or suspensions containing the active substances are made to drip in an environment where there is a countercurrent of air or other gas, with consequent instantaneous solidification of the drops of liquid to form solid particles by means of a drying and/or cooling process.

In the granulation technique, a solid particulate with small grain size (powder) is transformed into a product with large grain size in which the particles have a spheroidal or hemispherical shape. The particulate with small grain size may be obtained by drying a liquid in appropriate conditions.

With this technique, the active ingredients are used in pure form or mixed with suitable excipients and dehydrated in dryers capable of depositing the materials on inert cores and generating cores of material having a size of between 1 and 5 mm. Excipients suitable for the purpose are, for example: calcium sulphate; calcium carbonate; other soluble calcium salts; iron (II) sulphate; lignin; calcium, magnesium, and sodium sulphonates; polyethylene glycol at various degrees of polymerisation; or waxes of vegetable or animal origin.

In the compression technique, the cores are prepared by compressing with punches having a diameter of between 2 and 6 mm, preferably 3-4 mm, mixtures of powder containing, in addition to the powder of the active substances, excipients for compression such as soluble or insoluble diluents, disgregants, hardening agents, lubricants, glidants, and colourants. As soluble diluents there may be used: soluble cellulose derivatives; sugars; polyols; polyethylene-glycol derivatives; soluble inorganic salts; or soluble organic salts. As insoluble diluents there may be used: insoluble cellulose derivatives (microcrystalline cellulose or ethyl cellulose); insoluble polymers (polyvinyl acetate); inorganic salts (dibasic calcium phosphate or calcium carbonate). As disgregants there may be used: starch; starch derivatives (such as sodium starch glycolate); or cellulose derivatives (such as sodium carboxymethyl cellulose). As hardeners, excipients may be used that are able to enhance the strength of the cores, for example cellulose derivatives, such as hydroxypropyl cellulose, hydroxypropylmethyl cellulose, or else polymers and copolymers of acrylic and methacrylic acid, or vinyl polymers. As lubricants there may be added solid or liquid substances that are able to reduce the frictional forces between the particles and between the compact and the surfaces of the die in which the tablets are produced. Solid lubricants may, for example, be magnesium stearate, calcium stearate, polypropylene and polyethylene glycol copolymers (poloxamers), stearic acid, or leucin. Liquid lubricants may be silicone derivatives or fatty acids used alone or in mixtures. By the term "glidants" we mean materials that are able to improve the properties of flowability of the mixtures to be subjected to the tabletting process. Preferred glidants may, for example, be colloidal silica, or else talc. By the term "anti-adherents" we mean materials that are able to limit adhesion of the compacts to the punches during the tabletting process. Preferred anti-adherents may, for example, be talc, silicone derivatives, hydrogenated fatty acids, and organic salts of the stearic acid. The cores obtained by compression may have a mass of between 8 and 100 mg.

In the technique of extrusion pelletising the cores are produced by using mixtures of active substances in pelletising excipients, such as cellulose derivatives, hardeners, and any other additive normally used in the art. The machine extrudes the component at high pressures, also leading to a rise in temperature. The product thus obtained passes through an appropriately perforated plate referred to as "drawing die", which bestows the shape thereon. Typically, the holes are circular, and the pellet produced has a cylindrical shape. It may be necessary to use another machine that is able to abrade and round off the corners of the pellet in order to render its shape more similar to that of a sphere.

### Coatings

The cores as described above are subsequently coated with one or more layers or coating membranes.

All the materials used are low-melting ones; i.e., they melt at a temperature lower than 120°C, preferably a temperature T lower than 100°, 80°, 70°, 60°, 50°, or 40°C.

In an embodiment of the invention, the cores are coated with one or more of the following coating layers, preferably in the following order from the innermost to the outermost:
a) Layer 1: smoothing and/or thickening layer;
b) Layer 2: mechanical-reinforcement layer; and
c) Layer 3: layer for control of the release of the active ingredient or ingredients.
At least one of the coating layers referred to above, preferably the third and/or the first comprises one or more canalizing agents as described below.

### Canalizing agents

For the purposes of the present invention, by "canalizing agent" we mean any additive supplemented to the coating materials applied on cores containing the active ingredient or ingredients that will be able to modify or modulate the kinetics of permeability of the active ingredients through the coating layer and hence to slow down or speed up the rate of release thereof. The capacity of control of the canalizing additive depends upon its chemico-physical characteristics, upon its concentration in the coating layer, and upon the modalities of introduction of the additive into the layer. In the case of hydrophilic canalizing agents, their presence in the coating layer favours permeation of the aqueous fluids in the coating layer, enables dissolution of soluble active ingredients carried, and increases the rate of diffusion thereof through the coating layer. In the case of hydrophobic canalizing agents, permeability to water of the coating material is hindered by a higher hydrophobic resistance due to the canalizing agent, with a consequent slowing-down of release of the active ingredients carried. The greater the amount of canalizing agent present in the coating layer, the greater the capacity of control that it can exert on the rate of release of the active ingredient.

The canalizing agent is normally present in the dry material that constitutes a single coating layer in a percentage of between 1% and 50%, preferably between 2% and 30%, or between 5% and 10%.

The canalizing agent is normally included in the ready-for-use end product in a percentage of between 0.5% and 10%, preferably between 1% and 5%.

When the canalizing agent is soluble in the coating material, it can be applied on the cores in dispersion in the molecular state (solubilised or co-molten) and the solid coating will be constituted by a layer containing the canalizing agent in molecular form. If the canalizing agent is not soluble in the coating materials (liquids in solution or molten materials) used for the coating, it can be used as solid in suspension or as liquid in emulsion, and the coating layer will be constituted by solid material with the canalizing agent dispersed in particulate form therein. In this case, the capacity of modifying the permeability of the coating layer will depend upon the size of the particles of canalizing agent within the coating layer. The rate of release will be proportional to the size of the particles of canalizing agent present. The grain size of the canalizing agent in the form of particles may range between 1000 µm to 0.1 µm. An optimal grain size of the canalizing agent is less than 50 µm (i.e., 0.050 mm).

The canalizing agents are protein hydrolysates.

Preferred examples are the commercial product PN 14 (a dry powder containing amino acids and peptides), or else enzymes and micro-organisms (in either liquid or solid form), organic fertilisers such as meat flour and fur flour, dried algae, wood shavings, or else lignin sulphonate in either liquid or solid form.

### Layer 1 (smoothing and/or thickening layer)

The smoothing or thickening layer is able to bestow on the substrate/core properties and geometries more suited to the application of the subsequent coatings and reduce the amount of coating material necessary.

The thickness of the layers applied strictly depends upon the type of substrate to be coated. In the case where the substrate is spherical and smooth, the smoothing and thickening layer is not necessary.

Layer 1 is constituted by insoluble lipophilic materials, partially insoluble in water and of a low-melting type, which can be used alone or in mixture. Examples of these materials are: fats, hydrogenated fats, natural or synthetic waxes, or polymers of high molecular weight. The waxes may be natural, for example palm wax, or else synthetic waxes or paraffins. Examples of waxes suitable for the present invention are: beeswax, carnauba wax, sealing wax, lignite wax, rice wax, castor wax, lanolin, commercial wax SPICA Sasol H1, commercial wax SPICA Sasol C80, commercial wax SPICA Sasol A28, commercial wax SPICA Micro 600, commercial wax SPICA MPW301, and commercial wax SPICA 105. Waxes are substances made up of esters of fatty acids and alcohols, of vegetable, animal, mineral, or synthetic origin. From the chemical standpoint, waxes in a strict sense are mixtures of esters, alcohols, saturated acids with longest chain of between 14 and 30 carbon atoms. The low-melting polymers suitable for the invention are thermoplastic polymers, such as, for example, vinyl polymers and acrylic polymers.

Other materials suitable for providing the smoothing layer are hydrogenated or non-hydrogenated oils and fats and insoluble or soluble diluents, such as microcrystalline cellulose, dibasic calcium phosphate, lactose, and vegetable or animal flours and meals. Also used are products obtained by derivatisation of protein hydrolysates and gelatins, such as the ones described in the patent family of WO2008/075279 and US2010017972 entitled "New biodegradable polymeric derivatives" (Sartore L., Penco M., Sassi A., Candido M.C.), in particular, products obtained by derivatisation of protein hydrolysates and gelatins treated with polyfunctional epoxides described in the patent application EP2091998 (Candido M.C., Neresini M.C., 2016), Italian priority No. IT 102016000108137, filed on October 26, 2016, and moreover protein hydrolysates reacted with functionalised vegetable oils as described in the patent EP 2 500 371 A1. Layer 1 (smoothing-thickening layer) is particularly necessary when the core or substrate containing the active ingredients has a rough surface, with sharp corners or surface irregularities. In these circumstances, application of large coating thicknesses is required to be able to obtain continuity of coating and a sufficient strength of the coating layer (such as in the case of tablets). In these cases, using systems without canalizing agents, excessively long release times and excessively low rates of release would be obtained. Consequently, Layer 1 can contain the canalizing agents, as described above, above all if not contained in other layers.

Even though the aforesaid canalizing agents present chemico-physical characteristics that render them incompatible with lipophilic materials, application of the coating mixture is possible by exploiting the low melting points of lipophilic materials. The coating mass is heated to a temperature higher than the melting points of the lipophilic materials, and the canalizing agents are dispersed within the liquid. According to the melting points of the canalizing agents, the coating mass is consequently constituted by a mixture of materials that can be co-molten, when the melting points of the canalizing agents are lower than the coating temperature, or else dispersed in solid suspension within the liquid mass. In the case of a co-molten mixture, the materials solidify by cooling when they are transferred onto the surface of the substrate or core, thus generating a homogeneous layer of lipophilic materials canalized with hydrophilic materials. In the case of canalizing agents in suspension at the moment of solidification of the lipophilic suspending mass, the solids stratify uniformly within the coating layer. When the canalizing agents are dispersed as solids in suspension, the grain size of the dispersed materials is of fundamental importance to be able to guarantee an adequate uniformity of distribution and favour homogeneity of the mixture during distribution on the substrates.

The presence of a hydrophilic material within the hydrophobic structure of the coating layer is able to modulate the permeability of the control system, very probably by providing preferential channels for the passage of the aqueous fluids. The rate of release is consequently controlled by the concentration of hydrophilic material present in the composition, as well as by the thickness of the coating layer, rendering the mechanism of control of release more robust and rendering control of release more flexible according to the needs. The possibility of modulating release is particularly useful when the substrate is characterized by a surface that requires application of large coating thicknesses.

By exploiting the possibility of adding in Layer 1 an active ingredient different from the one added in the core, possible problems of incompatibility between the active ingredients may be overcome. Moreover, it is possible to implement programmed modes of release that envisage different times of release of the active ingredients.

Using in Layer 1 low-melting hydrophilic polymers provided with high viscosity (PEG 8000) as canalizing agents, a reduction of the rate of release of the active ingredients can be obtained. In effect, even though these canalizing agents have a low-melting point, in the molten state they present high viscosity and are difficult to mix with the dispersing lipophilic materials. When these polymers are dispersed in the molten wax, they create molten/molten emulsions, where the dispersing phase is constituted by the lipophilic material and the dispersed phase is the hydrophilic polymer. By exploiting the hydrophilic nature of the dispersed materials possible active ingredients with hydrophilic characteristics (such as salts, enzymes, and hydrophilic peptides) can be carried in the lipophilic layer and, once in contact with the aqueous fluids, be released slowly. In this way, the active ingredients carried in the lipophilic layer can be released with kinetics (rate and times) of release different from those of the active ingredients carried in the core.

Layer 1 can be obtained also with prevalently hydrophilic materials with high viscosity (PEG 8000) with lipophilic canalizing agents constituted by highly lipophilic waxes. In this case, both of the materials are applied in the molten state and, since they do not mix on account of the different polarity and viscosity, they can generate emulsions with the hydrophilic dispersing phase (PEG 8000) and the lipophilic dispersed phase (wax with high molecular weight). By exploiting these different characteristics of the materials, the lipophilic phase can be used as carrier of active ingredients of a lipophilic nature that are then released with times and rates different from those of the active ingredients contained in the core.

### b) Layer 2 (mechanical-reinforcement layer)

This layer is constituted by coating material with elastic or rigid properties prevalently obtained from water-insoluble polymers, which are able to increase the strength of the multilayer coating system. Since these polymers are essentially insoluble or weakly soluble in water, they are normally applied in the form of suspension, dispersion, or emulsion in aqueous medium.

The mechanical-reinforcement layer is principally constituted by a water-soluble or non-water-soluble material possibly in mixture with one or more components chosen from among plasticising agents, anti-adherent agents, and canalizing agents. Examples of suitable materials are: polyvinyl acetate; ethyl cellulose; cellulose acetate; insoluble acrylic or vinyl polymers with high permeability in regard to water, such as poly(ethylacrylate-comethylmethacrylate-cotrimethylammonium-ethylmethacrylate chloride) in a ratio of 1:2:0.1, poly(ethylacrylate-comethylmethacrylate-cotrimethylammonium ethylmethacrylate chloride) in a ratio of 1:2:0.2, and poly(ethylacrylate-comethylmethacrylate) in a ratio of 2:1; hydroxypropyl methylcellulose (HPMC); hydroxypropylcellulose (HPC); hydroxyethyl cellulose; polyvinyl alcohol (PVA); and polyethylene oxide (PEO). Preferably, polyvinyl acetate or polymethacrylate are used.

Normally, the thickness of the reinforcement layer is not sufficient to guarantee a control of the release of the active ingredients. In fact, the kinetics of release from the core is controlled by Layer 1 or Layer 3. Optionally within Layer 2 it is possible to insert an active ingredient in solution or suspension to obtain modes of release different from the ones that can be obtained when the active ingredient is carried only in the core. The active ingredient inserted in Layer 2 may be the same one added in the core, or else may be a different active ingredient. The active ingredient added in Layer 2 will be released before the one contained in the core.

### c) Layer 3 (layer for control of release of the active substances)

This layer comprises wax.

### Procedures

Coatings: As regards the coatings, for their application on the cores of the coating membrane or membranes, the technologies of *spray coating* and *melt coating* are used according to the film-forming characteristics of the materials used. For instance, in an embodiment of the invention, the core can be coated with a smoothing layer or control layer applied by melt-coating, or else the layer is a reinforcement layer applied by spray coating.

Each film or layer may be constituted by a polymeric material and/or waxy material applied according to the need in molten form or in a form dispersed in aqueous medium as suspension or emulsion. In particular, the polymeric material is applied as aqueous emulsion or suspension. Once application on the underlying layers is carried out, the water is removed, for example via a current of hot air, and the drying rate can be controlled through the flow and the temperature of the air. Hence, the polymeric material generates, by coalescence during drying, a continuous polymeric layer that envelops the granule or tablet. Suitable commercial suspensions/emulsions are, for example, Vinavil Ravemul T37 (see datasheet), Vinavil Crilat 1815 (see datasheet), Vinavil 8130L, Vinavil EVA 4612.

The waxy material can be formulated together with adequate additive dispersed in the molten mass in the form of molten/molten or molten/solid. For instance, when a mixture of wax and additive is brought above the melting points of both of the components, a dispersed molten/molten mix is obtained. Instead, when the operation is carried out at a temperature higher than the melting point of wax but lower than the melting point of the additive, a molten/solid dispersion will be obtained. After solidification, the characteristics of release both in soil and in the aqueous vehicle of this coating mix will in any case be different from those of the pure components applied individually.

The process of preparation of the product according to the invention uses thermodynamic multilayer technology.

By "thermodynamic method" we mean the use of heat for depositing material in molten form and form the coating layers. The technology exploits the phase transitions of low-melting materials through control of the heat introduced into or removed from the system.

In fact, the coating materials consist of or comprise components that melt at relatively low temperatures (<100°C). These materials are brought into the molten state through heating and are deposited or applied on the surface of the cores in successive coating layers of a thickness variable according to the needs. After deposition, by subtracting heat from the system on which operation is carried out, the solidification of the molten material is obtained with formation of a coating layer or film. After solidification, it is possible to heat the system again to process further the coating or else apply other coating layers on the cold substrate, repeating the same method various times, thus obtaining a multilayer structure. By adding heat to or subtracting heat from the system, it is possible to modulate appropriately the temperatures around the point of phase transition of the coating materials, thus obtaining the desired result of homogeneity of coating, sphericity, and adequate thickness.

To implement the systems according to the invention, the coating materials are applied in layers or films laid on top of one another by means of any process known to the person skilled in the field, for instance, via the technologies of *spray coating* and *melt coating*, according to the film-forming characteristics of the materials used and according to the equipment used.

The process according to the invention does not use organic solvents, some of which may be dangerous or flammable, but simply natural solutions (aqueous or oily solutions).

The equipment used for implementing the systems according to the invention is equipment known in the specific technical sector of the invention; for example, a coating pan can be used.

The coating pan is constituted by a rotary drum heated both on the outside and by a flow of air. An injection system (spray-coating) makes it possible to spread the coating evenly on the moving mass of cores. The flow of air and control of heat enable deposition of the material and consolidation thereof.

Alternatively, the coating process may be obtained using a fluid-bed process, which is preferable for substrates of small size (<4 mm). The cores are appropriately kept in stirring at the desired temperature with an ascending flow of air. The molten coating material is sprayed appropriately in a circumscribed area of the machine. Control of the flows of air enables the desired result to be obtained.

Another method is the one that uses a mechanical stirrer for keeping the mass of the cores in motion. This is a stirred cylinder, within which the cores are kept. The coating material is added from above whilst stirrer guarantees contact with the heating walls. During the various processes, it is possible also to bind fine powders through the use of bonding agents or in environments with controlled humidity (in a cylindrical or fluid-bed container).

However, the preferred coating modality is use of a coating pan with a perforated drum. In the case of use of perforated drum with substrates of a size of less than 2 mm it is necessary to apply a sufficiently fine mesh to prevent exit of the cores through the holes in the drum.

Using in successive steps appropriate coating materials with different physical characteristics, the multilayer granular formulations according to the invention are obtained.

In particular, the method according to the invention envisages one, two, three or more steps of coating of the cores with as many layers (the smoothing/thickening layer, the mechanical-reinforcement layer, and the layer for control of release, and/or intermediate layers of active ingredients), in which each step comprises one or more cycles of deposition of the corresponding materials.

In one embodiment of the invention, the process according to the invention may comprise a step A, namely, one or more cycles of coating of the cores with a smoothing and/or thickening layer. The purpose of this layer is to bestow on the substrates/cores properties and geometries that are most suited to the application of the subsequent coatings and to reduce the amount of coating material needed. In this step, the cores consisting of or comprising the active ingredient or ingredients are heated and are coated with a low-melting material in molten form, with or without canalizing agent, for generating the smoothing/thickening layer. Finally, the cores thus coated are cooled. Another embodiment of the process according to the invention comprises the step B, where the cores consisting of or comprising the active ingredient or ingredients are heated to a temperature below their melting points. If the cores have been previously coated with the smoothing/thickening layer, the temperature will be kept below the melting point of said layer. Next, the cores are treated in one or more coating cycles with molten coating material, with or without canalizing agent, suitable for creating a mechanical-reinforcement layer. Finally, the cores thus coated are cooled, hence enabling consolidation of the mechanical-reinforcement layer.

Another embodiment of the process according to the invention, envisages step C, in which the cores are coated with a layer for control of release of the active ingredients. The coating step C uses the same coating materials, or preferably materials different from the ones described for step A. Also in this case, the coating materials may or may not contain canalizing agents. In particular, the non-coated cores or, alternatively, the cores coated in step A and/or in step B are heated, taking care to prevent melting of the cores themselves or of the previous coating. Next, the cores are treated in one or more coating cycles with molten coating material suitable for creating a layer for control of release of the active ingredients. Finally, the cores thus coated are cooled to enable consolidation of the control layer, namely, the layer that modulates the rate of release in the soil or in the environment of the active ingredients contained in the core.

### Geometry of the systems of the invention

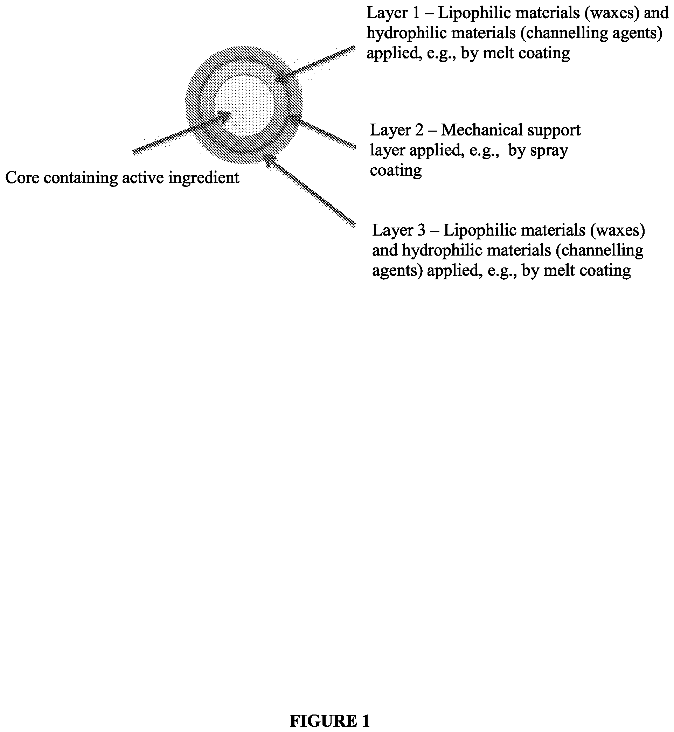

A system with three layers (A, B, and C) is schematically illustrated in Figure 1 and represents the preferred embodiment of the invention. However, systems in which the cores are coated by just one layer (e.g., A or C) or by two layers (e.g., A and C, or A and B, or B and C) or more complex multilayer systems, characterized by more than three layers in addition to the core, equally fall within the scope of the present invention.

In one embodiment of the invention, the individual particles, namely, the coated cores, may comprise, between two coating layers, an additional layer containing an active ingredient identical to or different from the one already contained in the core. The additional layer may be located, for example, between the reinforcement layer and the control layer or else between the smoothing layer and the reinforcement layer. In another embodiment, the additional layer containing the second active ingredient may be located outside the control layer and will in turn then be coated with a second control layer.

The techniques of deposition of the new active layer are the same as the ones used for deposition of the coating layers of the system and already described above.

In an alternative embodiment, the second active ingredient maybe dissolved or suspended directly within the liquid/fluid mass used for generating a coating layer, for example in the material that constitutes the smoothing layer, or reinforcement layer, or control layer.

Once again, it is possible to alternate coatings with active ingredients in successive layers until more than five distinct and distinguishable layers are formed. The spherical shape is not the only one considered within the scope of the present invention; systems may be obtained with a cylindrical starting shape (pellets) and an irregular starting shape (fluid-bed granules, agglomerates, etc.).

### Ready-to-use articles and formulations

The coated product according to the invention is supplied in a ready-to-use article or formulation. A single formulation may comprise particles of just one type, hence containing just one active ingredient, for example a biostimulant, or else particles of a different structural and/or functional type containing two or more active ingredients. By way of example, formulations ready for application in agriculture may be made up as specified below.

Formulation 1: 10% of tablets containing biostimulant of animal origin for quick release (approximately 10 days), 10% of tablets containing biostimulant of animal origin for slow release (approximately 40 days), 80% of tablets containing natural active ingredients of vegetable origin (extracts of algae and other vegetable flours) supplemented with inorganic elements in small amounts, with coating with modulated release within 60 days.

Formulation 2: 2% of tablets containing biostimulant of animal origin for quick release (approximately 10 days), 98% of inorganic fertiliser of a slow-release NPK type.

Formulation 3: 100% of biostimulant of animal origin supplemented with inorganic salts with an amount of 20% on the core (potassium, phosphorus, and salts of iron, boron, manganese, and molybdenum) according to the specific requirements of the various crops and coated with thicknesses that enable slow release (40-80-120 days).

The ready-to-use formulations are then packaged in commercial articles, for example, in the following forms:
Form 1 - A sachet containing a single dose of active ingredient to be used on the individual plant; a number of sachets may be packaged in one and the same box to be used in various steps of plant growth;
Form 2 - the product is sold in bags of amounts that range from 100 g to 5 kg;
Form 3 - the product is mixed with traditional organic or inorganic fertilisers and sold in bags of different sizes;
Form 4 - the product is sold in 100-g sachets;
Form 5 - the product is sold in 500-ml bottles; and
Form 6 - the product is sold together with other products for the hobby and gardening sectors, such as (biodegradable and non-biodegradable) plant pots, plant-pot saucers, watering cans.

### Profile of release

Albeit without wishing to tie down the scope of the invention forming the subject of the present patent application to scientific theories or explanations, it is deemed that slow release of the active ingredients by the multilayer formulations according to the invention will be obtained through a series of successive steps, namely, a first step in which the water degrades the coating starting from its weakest point (imperfection or canalizing agent), a second step in which the water dissolves the active ingredient contained within the capsule, and a third step in which the solution exits, leaving the empty shell of wax and polymer (which floats).

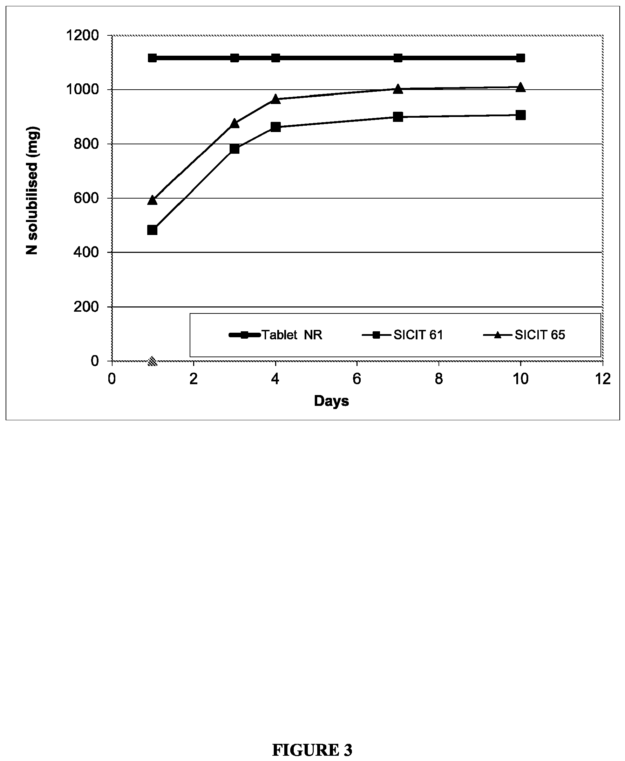

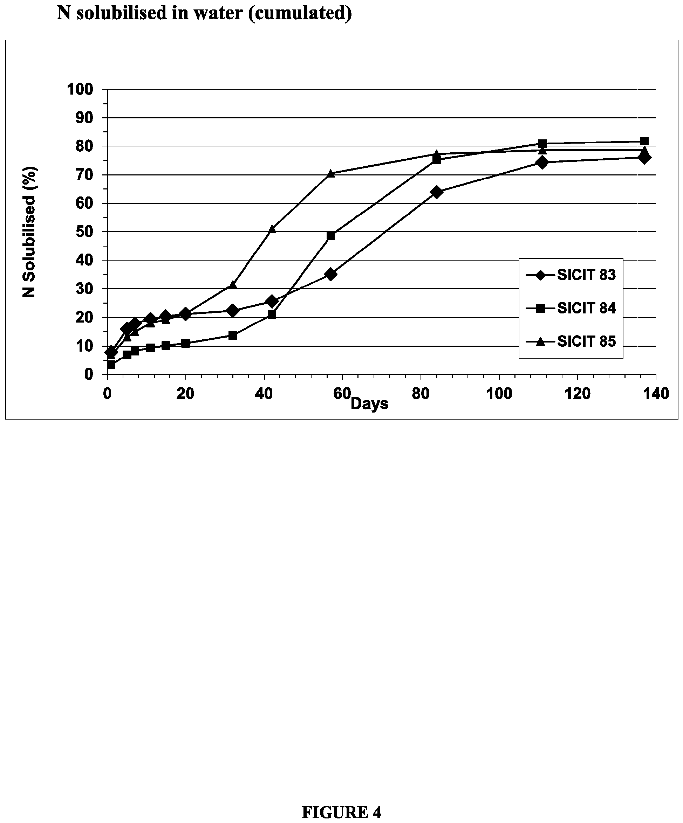

Two examples of release in water of organic nitrogen formulated according to the invention are illustrated in Figures 3 and 4.

### Industrial applications of the invention

The present invention finds application in the agronomic field as additive or activator of common fertilisers. It is moreover possible to use this type of technology to coat other types of active ingredient that requires a slow release in water, a certain resistance to humidity, and reduction of hygroscopicity.

In particular, it is proven that the use of appropriate concentrations of products obtained thanks to the methods described herein generate positive effects on crops of various kinds, increasing for example productivity and development of the vegetable and microbial biomass useful for the soil.

The method described in the invention may be used also for reducing the hygroscopicity of organic fertilisers and obtaining in this way products of higher commercial value since they are less subject to clumping, crushing and flow resistant.

### Analytical methods

### Method for determining the release into the soil of protein hydrolysates in solid form

The method comprises the stages listed below.
a) Analysis of the hydrolysate: a part of the sample of the hydrolysate is taken, and the initial total nitrogen is then determined with elementary analysis of a LECO type or equivalent. The samplings are repeated until a repeatable datum is obtained, and the average datum is calculated.
b) Preparation of the soil: a soil with neutral pH and containing an average amount of organic substance (1-2 g of organic C per kilogram) is used. The soil must be dried in air and sifted with a 2-mm sieve to remove the skeleton, i.e., the granulometric fraction (yarn) greater than 2 mm of the composition of the soil (usually gravel and stones). Next washed quartz sand is added to the soil in a ratio of 15% with respect to the weight of soil.
c) Preparation of the columns: approximately 50-ml plastic columns are used, provided on the bottom with a tube that can be closed with a clamp. A nylon mesh is set on the bottom for holding the soil. An amount equivalent to 40 g of dry soil is weighed, and this is mixed with 1 g of the fertiliser to be tested. The mixture is put into the column and is covered with another nylon mesh.
d) Leachings: an amount of 35 ml of deionised water is added, the discharge being kept closed for approximately 10 min. Then the drain-off valve is opened, and the percolate is collected, up to completion of the percolation. The volume of the percolated solution is determined, and the solution is then filtered using Whatman 42 filter paper. The filtered solution is preserved in a freezer at -20°C up to the moment of chemical analysis.
   Leachings are repeated according to a geometrical time series (e.g., 1, 3, 6, 10, 14, 20, 28, 42, 56, 84 days or until 80% of total nitrogen has been released as a whole (i.e., considering the value obtained by adding up the amounts released in the various intervals).
e) Analysis of the percolate: the percolates are analysed for total N and C using an automatic analysis based upon the Dumas' method (e.g., Shimadzu TOC-VCPN and TNM-1 module).
f) Processing of the results: the analytic data are expressed as absolute concentration and as percentage relative release on the amount of initial total nitrogen introduced.

The method is carried out at room temperature (20-25°C).

### Method for determining the release in water of protein hydrolysates in solid form

Foreword - Protein hydrolysates of animal or vegetable origin may be products in solid form. These products are readily soluble in water and quickly release amino acids and peptides into the soil. In order to delay release thereof, hydrolysates in solid form have been coated with polymeric layers laid on top of one another that prevent contact with water and hence slow down release thereof. To evaluate the tightness and effectiveness of the coating the test of release in water is carried out as described hereinafter.

The method comprises the steps listed below.
a) A part of the sample is taken and the initial total nitrogen is determined using an elementary analyser of a LECO type or equivalent (NO₂). The samplings are repeated until a repeatable datum is obtained, and the average datum is calculated.
b) A part of the sample (10 g) is put in a sachet made of gauze (or other inert material), immersed in 200 ml of mains water and left to soak for the required time in an incubator under stirring (100 rpm) and heating (40°C).
c) After 24 h the sachet is removed from the solution and the total nitrogen present in the aqueous extract is analysed using the LECO method or equivalent (NO₂).
d) The partially spent sachet is immersed in new clean water (200 ml), and release is continued, removing the solution after 3, 5, 7, 10, 14, 28, 42, 56, 84, 112, 140, and 168 days or until 80% of total nitrogen has been released as a whole (i.e., considering the value obtained by adding up the amounts released in the various intervals).
e) The analytical data are expressed as absolute concentration and as percentage relative release on the initial total amount of nitrogen introduced.

The method is carried out at the temperature of 40°C in a thermostatted environment.

To improve reproducibility of the method, an orbital mini-stirrer with incubator is used (code VWR 444-0274). The stirring rate to be used is 100 rpm.

### Experimental part

### Cores and active ingredients

As substrate for providing the systems, cores were used containing the active ingredient PN 14 obtained by drying of solutions, granulation of powders, or compression of powders.

### Coating

The coating process was carried out using an apparatus of a high-shear mixer type (Kenwood), with "trickle" system of distribution of the binding material. The method envisages slow and continuous pouring of the coating liquid in the form of a thin trickle. This enables deposition of the coating material on the material to be coated in a controlled way according to the thickness of the trickle. Alternatively, it is possible to use a 10-1 coating pan with non-perforated bottom (Logica Progetti, Italy) with system for diffusing the air with non-immersed tube and two-way nebuliser (mod. 970 7-1 S75 Schlick, Germany) with a nozzle having a diameter of 1.2 mm, and a tube having an internal diameter of 1.6 mm. In this case, the system of distribution of the molten substance was provided with 90° 5-L airless atomiser (Logica Progetti, Italy). For preparation of the systems, the cores were coated with three layers of materials. The innermost layer (Layer 1) was applied by stratification of molten material by melt coating, the intermediate layer (Layer 2) was applied by spray coating of vinyl or acrylic polymers in aqueous dispersion, and finally the outermost layer (Layer 3) was applied by layering of molten and coloured material. The process was carried out by loading approximately 300 g of substrate into the high shear mixer system or else by loading 3000 g of substrate into the coating pan.

For providing the systems, there may alternatively be used equipment commonly employed for coating substrates of small dimensions (0.1-10 mm in diameter) that is able to keep the materials in constant motion, is provided with heating and cooling systems, and equipped for distribution of the molten materials and the materials in dispersion with liquid carriers *(melt coating of spray coating).*

Described in detail hereinafter are the operations carried out during the coating process.

### Loading

In the loading step, the product was kept in rotation in the apparatus at the minimum rpm (approximately 3 rpm).

### Heating

To be able to implement a process that will enable a good distribution of the coating material on the surface of the cores, the substrate was heated by means of a ventilation system using hot air at 60°C for the product to reach an ideal temperature for coating (45-46°C). During this step, the system for suction of air contributed to eliminating the powder present on the surfaces of the granules. This powder, rotating together with the granules, would risk creating interference with the uniformity of the coating.

### Promoter

When the temperature of the granules reaches 37-40°C, a minimal amount of lipophilic liquid that does not solubilise the active ingredient is added (e.g., peanut oil or liquid paraffin) in order to facilitate subsequent coating of the granules by preparing the surfaces of the cores for an optimal adhesion of the first layer. The presence of this thin film of liquid lipophilic material favours adhesion of the layer of lipophilic material on the surface of the substrates, which prevalently have a hydrophilic nature. Moreover, this step further reduces the presence of powder on the surface of the substrate.

### Layer 1

Once a temperature of the product of 45°C has been reached, the speed of stirring of the substrate is increased, and the distribution of the molten material kept at the temperature of 90°C starts. The temperature of the ventilation air is fixed at 45°C to keep the cores at the temperature of around 45°C. The distribution of the molten material is alternated with steps of cooling/rolling of the product.

When Layer 1 is constituted by a lipophilic material and by a hydrophilic material that functions as low-melting canalizing agent, such as PEG 400, PEG 1500, PEG 4000, poloxamer P407, or poloxamer P807, the coating mass is constituted by a mixture of the two co-molten materials that solidify by cooling on the surface of the substrate. When the canalizing hydrophilic material is not a low-melting material, the solid is distributed in suspension in the molten lipophilic mass. In the case of canalizing agents distributed in suspension, it is of fundamental importance for the grain size of the suspended solid to be less than 100 µm, preferably less than 50 µm, to enable a more uniform distribution on the surface of the substrate so as to prevent phenomena of occlusion of the distribution systems. In order to limit sedimentation of the solid in the molten mass, the coating material is kept under constant stirring. The rate of release is controlled by the concentration of polymer present in the composition. The amount of canalizing agent is present in the composition.

### Layer 2

Without interrupting the process, a coating is applied with an aqueous dispersion of an acrylic or vinyl polymer in aqueous suspension (50% w/w) (Ravemul T37 or CRILAT 1815, Vinavil) by using a nebuliser supplied with a peristaltic pump.

### Layer 3

For application of Layer 3 the same considerations described for Layer 1 apply. The canalizing materials and the concentrations may be modified to be able to obtain the desired modes of release of the different active ingredients.

### Cooling

Before removing the coated systems from the apparatus, the coated material should be cooled so as to solidify completely the materials applied on the surfaces. This operation is carried out by introducing cold air into the apparatus until a temperature of the product is reached approximately 15°C lower than the melting point of the material with the lowest melting point applied.

### Examples

The invention is explained in all its technical details with the examples 4, 6, 8, 11 below, which have a purely explanatory and non-limiting purpose.

### Example 1: SICIT 61 (not according to the invention)

This is a monolayer system without canalizing agent with core constituted by 2.5-mm tablets (3000 g).

For the process of production of the core, a rotary compressor Ronchi FA (Officine Meccaniche Ronchi, Italy) was used with acquisition of the forces of compression of the upper punch (F_{A}) and lower punch (F_{L}) and of the pre-compression and expulsion forces (F_{E}) with 2.5-mm punches (radius of curvature 2.5 mm).

Appearing below is the composition of the mixture used for the tabletting process. The tablets had an average weight of 13 mg, breaking strength of 10N, and a friability of 0.3%.

| ***Components*** | **SICIT S04 (%)** |
|---|---|
| Protifert PN 14 powder | 96 |
| Silica | 0.5 |
| Talc | 2.5 |
| Magnesium stearate | 1 |
| Total | 100.0 |

### Composition of layers applied

| ***SICIT 61*** | **Component** | **Quantity (g)** | **Quantity (%)** |
|---|---|---|---|
| Promoter | peanut oil | 25 | 3.4 |
| Layer 1 | vegetable palm wax | 700 | 96.4 |
| | green wax colourant | 1 | 0.1 |
| Total | | 726 | 100.0 |

### Process parameters for setting up SICIT 61 systems

| Process parameters | Durat. of step (min) | Rate of rotation (rpm) | Input-air temperature (°C) | Input-air flow rate (%) | Output -air flow rate (%) | Product temperature (°C) | Negative pressure of drum (mm H₂0) |
|---|---|---|---|---|---|---|---|
| Loading | 1 | 5 | 60 | 50 | 50 | 15-20 | - 3 |
| Heating | 20 | 15 | 60 | 70 | 70 | 32.7 | - 3 |
| Promoter | 10 | 20 | 45 | 50 | 50 | 35.8 | - 3 |
| Melt coating | 40 | 20 | 45 | 70 | 70 | 44.2 | - 4 |
| Cooling | 10 | 5 | 20 | 70 | 70 | 45-35 | - 4 |

### Example 2: SICIT 63 (not according to the invention)

This is a three-layer system with soluble canalizing agent (PEG 4000) with core constituted by tablets.

Appearing below is the composition of the layers applied.

| ***SICIT 63*** | **Component** | **Quantity (g)** | **Quantity (%)** |
|---|---|---|---|
| Promoter | peanut oil | 25 | 1,6 |
| | vegetable palm wax | 686 | 45.0 |
| Layer 1 | canalizing agent PEG | 14 | |
| | 4000 | | 0,9 |
| Layer 2 | Crilat 1815 | 100 | 6,6 |
| | vegetable palm wax | 686 | 45.0 |
| Layer 3 | canalizing agent: PEG | 14 | |
| | 4000 | | 0,9 |
| | orange wax colourant | 1 | 0.1 |
| Total | | 1526 | 100 |

### Process parameters for setting up SICIT 63 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 50 | 15-20 | - 4 |
| Heating | 20 | 10 | 47 | 70 | 100 | 31 | - 4 |
| Promoter | 5 | 15 | 46 | 70 | 70 | 38 | - 4 |
| Melt coating | 40 | 15 | 44 | 70 | 70 | 44-46 | - 4 |
| Spray coating | 7 | 20 | 42 | 50 | 50 | 45 | - 1 |
| Drying | 10 | 20 | 42 | 70 | 70 | 38 | - 1 |
| Melt coating | 45 | 20 | 45 | 70 | 70 | 44-46 | - 4 |
| Cooling | 10 | 5 | 20 | 50 | 50 | 46-35 | - 4 |

Photograph of the coated systems containing water-soluble canalizing agents obtained starting from tablets, such as cores containing the active ingredient.

### Example 3: SICIT 64 (not according to the invention)

This is a three-layer system with low-melting canalizing agent (poloxamer P407) at 2% in each layer, with core constituted by 2.5-mm tablets (3000 g).

### Composition of layers applied

| ***SICIT 64*** | **Component** | **Quantity (g)** | **Quantity (%)** |
|---|---|---|---|
| Promoter | peanut oil | 25 | 1.6 |
| Layer 1 | vegetable palm wax | 686 | 45.0 |
| | canalizing agent - polaxamer P407 (2%) | 14 | 0.9 |
| Layer 2 | Crilat 1815 | 100 | 6.6 |
| Layer 3 | vegetable palm wax | 686 | 45.0 |
| | canalizing agent: polaxamer P407 (2%) | 14 | 0.9 |
| | pink wax colourant | 1 | 0.1 |
| Total | | 1526 | 100.0 |

### Process parameters for setting up SICIT 64 systems

| Process parameters | Durat. of step (min) | Rate of rotation (rpm) | Input-air temperature (°C) | Input -air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 100 | 15-20 | - 4 |
| Heating | 18 | 5 | 47 | 50 | 100 | 31 | - 4 |
| Promoter | 5 | 20 | 47 | 70 | 70 | 38 | - 4 |
| Melt coating | 60 | 20 | 45 | 70 | 70 | 44-47 | - 4 |
| Spray coating | 7 | 15 | 45 | 50 | 50 | 45 | - 2 |
| Drying | 10 | 15 | 45 | 70 | 70 | 39 | - 2 |
| Melt coating | 40 | 20 | 45 | 70 | 70 | 45-46 | - 4 |
| Cooling | 10 | 5 | 20 | 50 | 50 | 46-32 | - 4 |

### Example 4: SICIT 65 (according to the invention)

This is a monolayer system with non-low-melting canalizing agent (PN 14) at 5% in each layer with core constituted by 2.5-mm tablets (3000 g). PN 14 is the same active ingredient as the one present in the core.

### Composition of layers applied

| ***SICIT 65*** | **Component** | **Quantity (g)** | **Quantity (%)** |
|---|---|---|---|
| Promoter | peanut oil | 25 | 3.4 |
| Layer 1 | vegetable palm wax | 665 | 91.6 |
| | canalizing agent: PN 14 (5%) | 35 | 4.8 |
| | blue wax colourant | 1 | 0.1 |
| Total | | 726 | 100.0 |

### Process parameters for setting up SICIT 65 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 50 | 15-20 | - 4 |
| Heating | 20 | 15 | 60 | 50 | 100 | 38 | - 4 |
| Promoter | 5 | 15 | 48 | 50 | 100 | 45 | - 4 |
| Melt coating | 40 | 20 | 45 | 70 | 70 | 44 | - 4 |
| Cooling | 10 | 5 | 20 | 50 | 50 | 44-30 | - 1.3 |

### Example 5: SICIT 80 (not according to the invention)

This is a three-layer system with low-melting canalizing agent (poloxamer P407) at 2% in each layer with core constituted by 2.5-mm tablets (3000 g).

The starting substrate is identical to what has been described for SICIT 61. The equipment and the process conditions for producing the system are similar.

The canalizing agent used in this example was poloxamer P407, a block copolymer constituted by a polyethylene-glycol block, a polypropylene-glycol block, and a polyethylene-glycol block. **Owing to its hydrophilic and lipophilic properties, it is considered a good surfactant. Poloxamer is soluble in water and in the molten state evenly distributes in the lipophilic mass.** Poloxamer has a melting point that enables co-melting with the wax, altering the characteristics of viscosity of the coating phase. For this reason, it is important for the coating material to be kept under constant stirring during coating.

| ***SICIT 80*** | **Component** | **Quantity (g)** | **Quantity (%)** |
|---|---|---|---|
| Promoter | peanut oil | 25 | 1.5 |
| | vegetable palm wax | 686 | 42.2 |
| Layer 1 | canalizing agent: polaxamer | 14 | |
| | P407 | | 0,9 |
| Layer 2 | Crilat 1815 | 100 | 6.2 |
| | vegetable palm wax | 786 | 48.3 |
| Layer 3 | canalizing agent: polaxamer | 14 | |
| | P407 | | 0,9 |
| | orange colourant | 1 | 0.1 |
| Total | | 1626 | 100 |

### Process parameters for setting up SICIT 80 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 100 | 15-20 | - 4 |
| Heating | 20 | 5 | 47 | 50 | 100 | 33 | - 4 |
| Promoter | 5 | 20 | 47 | 70 | 70 | 40 | - 4 |
| Melt coating | 60 | 20 | 45 | 70 | 70 | 44-47 | - 4 |
| Spray coating | 15 | 15 | 45 | 50 | 50 | 45 | - 2 |
| Drying | 30 | 15 | 45 | 70 | 70 | 40 | - 2 |
| Melt coating | 20 | 20 | 45 | 70 | 70 | 45-46 | - 4 |
| Cooling | 10 | 5 | 20 | 50 | 50 | 46-32 | - 4 |

### Example 6: SICIT 36 (according to the invention)

This is constituted by PN 14 granular cores with a starting size of less than 2 mm (3000 g), with systems canalized with 1% PN 14 canalizing agent.

Since the PN 14 active ingredient is characterized by a high solubility in water and a grain size of less than 50 µm, the powder dispersed in suspension of the molten wax in Layers 1 and 3 was exploited for modulating the permeability of Layers 1 and 3. Within each layer an amount of canalizing agent equal to 1% of the layered mass was added.

Notwithstanding the extremely small amount of active ingredient present in Layers 1 and 3 as compared to the amount added in the cores, once the system is applied to the soil, it is able to release rapidly a small amount of active ingredient. The amount added in the core will instead be released more slowly according to the characteristics of permeability of Layers 1 and 3.

The process conditions are similar to those for SICIT 63.

| ***SICIT 36 granules*** | **Component** | **Quantity (g)** | **Quantity (%)** |
|---|---|---|---|
| Promoter | peanut oil | 22.5 | 1.2 |
| Layer 1 | vegetable palm wax | 792 | 43.5 |
| | canalizing agent: PN 14 | 8 | 0,4 |
| Layer 2 | Crilat 1815 | 100 | 5.5 |
| Layer 3 | vegetable palm wax | 891 | 48,9 |
| | canalizing agent: PN 14 | 9 | 0.5 |
| Total | | 1822.5 | 100 |

### Process parameters for setting up SICIT 36 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 100 | 15-20 | - 4 |
| Heating | 10 | 15 | 33 | 50 | 100 | 31 | - 4 |
| Promoter | 15 | 20 | 36 | 55 | 55 | 36 | - 4 |
| Melt coating | 40 | 20 | 32 | 70 | 70 | 45-47 | - 4 |
| Spray coating | 15 | 15 | 32 | 50 | 50 | 33-31 | - 2 |
| Drying | 30 | 15 | 45 | 70 | 70 | 40 | - 2 |
| Melt coating | 20 | 20 | 40 | 70 | 70 | 43-46 | - 4 |
| Cooling | 10 | 5 | 30 | 50 | 50 | 46-32 | - 4 |

### Example 7: SICIT 83 (not according to the invention)

This is a three-layer system, without canalizing agent, constituted by PN 14 granular cores with starting dimensions of less than 1-4 mm, not sifted.

### Composition of layers applied

| ***SICIT 83*** | **Component** | **Quantity (g)** | **Quantity (%)** |
|---|---|---|---|
| Promoter | peanut oil | 25 | 1.5 |
| Layer 1 | vegetable palm wax | 700 | 43.1 |
| Layer 2 | Crilat 1815 | 100 | 6.2 |
| Layer 3 | vegetable palm wax | 800 | 49.2 |
| | orange colourant | 1 | 0.1 |
| Total | | 1626 | 100.0 |

### Process parameters for setting up SICIT 83 systems

| Process parameters | Durat. of step (min) | Rate of rotation (rpm) | Input-air temperatur e (°C) | Input-air flow rate (%) | Outputair flow rate (%) | Product temperature (°C) | Negative pressure of drum (mm H₂0) |
|---|---|---|---|---|---|---|---|
| Loading | 1 | 5 | 42 | 50 | 100 | 15-20 | - 4 |
| Heating | 35 | 15 | 43 | 50 | 100 | 31 | - 4 |
| Promoter | 15 | 20 | 45 | 55 | 55 | 43 | - 4 |
| Melt coating | 40 | 20 | 47 | 70 | 70 | 45-47 | - 4 |
| Spray coating | 15 | 10 | 35 | 50 | 50 | 35 | - 2 |
| Drying | 30 | 10 | 45 | 70 | 70 | 35 | - 2 |
| Melt coating | 20 | 20 | 44 | 70 | 70 | 44-47 | - 4 |
| Cooling | 10 | 10 | 31 | 50 | 50 | 46-33 | - 4 |

### Example 8: SICIT 84 (according to the invention)

This is a three-layer system, with Layer 1 canalized with 2% PN 14 canalizing agent, Layer 3 containing no canalizing agent, and PN 14 granular cores having starting dimensions of less than 1-4 mm, not sifted.

### Composition of layers applied

| ***SICIT 84*** | **Component** | **Quantity (g)** | **Quantity (%)** |
|---|---|---|---|
| Promoter | peanut oil | 22.5 | 1.2 |
| Layer 1 | vegetable palm wax | 784 | 43.0 |
| | canalizing agent: PN 14 (2%) | 16 | 0.9 |
| Layer 2 | Crilat 1815 | 100 | 5.5 |
| Layer 3 | vegetable palm wax | 900 | 49.4 |
| | blue wax colourant | 1 | 0.1 |
| Total | | 1823.5 | 100 |

### Process parameters for setting up SICIT 84 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 42 | 50 | 100 | 15-20 | - 4 |
| Heating | 10 | 15 | 43 | 50 | 100 | 37 | - 4 |
| Promoter | 15 | 20 | 45 | 55 | 55 | 40 | - 4 |
| Melt coating | 35 | 20 | 47 | 70 | 70 | 47 | - 4 |
| Spray coating | 20 | 10 | 38 | 50 | 50 | 37 | - 2 |
| Drying | 20 | 10 | 31 | 70 | 70 | 34 | - 2 |
| Melt coating | 35 | 20 | 45 | 70 | 70 | 46-47 | - 4 |
| Cooling | 20 | 10 | 31 | 50 | 50 | 39 | - 4 |

### Example 9: SICIT 85 (not according to the invention)

This is a three-layer system, with Layer 1 canalized with 1% poloxamer canalizing agent dispersed in the molten state in the wax, and saccharose distributed as powder on the substrate during stirring. Layer 2 is obtained with Ravemul T37, an aqueous dispersion of a vinylacetate polymer derivative. Layer 3 contains poloxamer P407 at 1% as canalizing agent. The system has PN 14 granular cores with starting size of less than 1-4 mm, not sifted.

### Composition of layers applied

| ***SICIT 85*** | **Component** | **Quantity (g)** | **Quantity (%)** |
|---|---|---|---|
| Promoter | peanut oil | 25 | 1.3 |
| Layer 1 | vegetable palm wax | 792 | 41.7 |
| | saccharose crystals | 68 | 3.6 |
| | canalizing agent: poloxamer 407 (1%) | 8 | 0.4 |
| Layer 2 | Ravemul T37 | 100 | 5.3 |
| Promoter | peanut oil | 5 | 0.3 |
| Layer 3 | vegetable palm wax | 891 | 46.9 |
| | canalizing agent: poloxamer 407 (1%) | 9 | 0.5 |
| | green wax colourant | 1 | 0.1 |
| Total | | 1899 | 100.0 |

### Process parameters for setting up SICIT 85 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 42 | 50 | 100 | 15-20 | - 4 |
| Heating | 10 | 15 | 43 | 50 | 100 | 38 | - 4 |
| Promoter | 10 | 15 | 43 | 55 | 55 | 39 | - 4 |
| Melt coating | 35 | 20 | 43 | 70 | 70 | 47 | - 4 |
| Spray coating | 20 | 15 | 45 | 50 | 50 | 37 | - 2 |
| Drying | 20 | 15 | 44 | 70 | 70 | 34-44 | - 2 |
| Promoter | 5 | 20 | 45 | 70 | 70 | 44 | - |
| Melt coating | 35 | 20 | 45 | 70 | 70 | 46-47 | - 4 |
| Cooling | 20 | 10 | 31 | 50 | 50 | 39 | - 4 |

### Example 10: SICIT 930 (not according to the invention)

This is formed starting from 3000 g of PN 14 granular cores with starting size of less than 2 mm, with systems canalized with (micronised) saccharose canalizing agent.

Since the saccharose canalizing agent is characterized by a high solubility in water and a grain size of less than 50 µm, the powder dispersed in suspension of PEG 8000 in the molten state in Layers 1 and 3 was exploited for modulating the permeability of Layers 1 and 3.

Within each layer an amount of canalizing agent equal to 1% of the layered mass was added.

Notwithstanding the extremely small amount of active ingredient present in Layers 1 and 3 as compared to the amount added in the cores, once the system is applied to the soil, it is able to release rapidly a small amount of active ingredient. The amount added in the core will instead be released more slowly according to the characteristics of permeability of Layers 1 and 3.

The process conditions are similar to those of SICIT 63.

| ***SICIT 930 granules*** | **Component** | **Quantity (g)** | **Quantity (%)** |
|---|---|---|---|
| Promoter | paraffin oil | 25 | 1,4 |
| | PEG 8000 | 792 | 44.1 |
| Layer 1 | (micronised) saccharose Surelease (ethyl-cellulose) | 8 | 0,4 |
| Layer 2 | | 70 | 3,9 |
| Layer 3 | PEG 8000 | 891 | 49,6 |
| | (micronised) saccharose | 9 | 0.5 |
| Total | | 1795 | 100 |

### Process parameters for setting up SICIT 930 systems

| Process parameters | Durat. of step (min) | Rate of rotation (rpm) | Input-air temperatur e (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 62 | 50 | 100 | 15-20 | - 4 |
| Heating | 10 | 15 | 35 | 50 | 100 | 31 | - 4 |
| Promoter | 15 | 20 | 40 | 55 | 55 | 36 | - 4 |
| Melt coating | 40 | 20 | 39 | 70 | 70 | 45-47 | - 4 |
| Spray coating | 15 | 15 | 40 | 50 | 50 | 33-31 | - 2 |
| Drying | 30 | 15 | 39 | 70 | 70 | 40 | - 2 |
| Melt coating | 20 | 20 | 40 | 70 | 70 | 43-46 | - 4 |
| Cooling | 10 | 5 | 31 | 50 | 50 | 46-32 | - 4 |

### Example 11: GS 410 (according to the invention)

This is formed starting from 300 g of cores constituted by PN 14 tablets with a size of 2.5 mm, with systems canalized with 2% PN 14 canalizing agent (on the wax).

Since the PN 14 active ingredient is characterized by a high solubility in water and a grain size of less than 50 µm, the powder dispersed in suspension in the molten wax in Layers 1 and 3 was exploited for modulating the permeability of Layers 1 and 3. Within each layer an amount of canalizing agent equal to 1% of the layered mass was added.

Notwithstanding the extremely small amount of active ingredient present in Layers 1 and 3 as compared to the amount added in the cores, once the system is applied to the soil, it is able to release rapidly a small amount of active ingredient. The amount added in the core will instead be released more slowly according to the characteristics of permeability of Layers 1 and 3.

A batch system with stirrer and wall heating is used.

The stirring rate is low, and the stirrer is provided with a ploughshare mixer that enables a greater contact of the product with the wall.

The tablets are heated up to the melting point of the wax (approximately 50°C) and then the components are added by "trickling".

| ***GS412 Tablets*** | **Component** | **Quantity (g)** | **Quantity (%)** |
|---|---|---|---|
| GS412 Tablets | | 300 | 73.5% |
| Promoter | palm oil | 5 | 1.2% |
| Layer 1 | vegetable palm wax | 24 | 5.9% |
| | canalizing agent: PN 14 (2%) | 6 | 1.5% |
| Layer 2 | Crilat 1815 | 3 | 0.7% |
| Layer 3 | vegetable palm wax | 56 | 13.7% |
| | canalizing agent: PN 14 (2%) | 14 | 3.4% |
| Total | | 408 | |

### Example 12: GS 412 (not according to the invention)

This is formed starting from 300 g of cores constituted by PN 14 tablets with starting size of 2.5 mm, with systems canalized with Sasol H1 (product SPICA - Hydrocarbon with melting point of 100°C).

A batch system with stirrer and wall heating is used.

The stirring rate is low, and the stirrer is provided with a ploughshare mixer that enables a greater contact of the product with the wall.

The tablets are heated up to the melting point of the wax (approximately 50°C) and then the components are added by "trickling".

| ***GS412 Tablets*** | **Component** | **Quantity (g)** | **Quantity (%)** |
|---|---|---|---|
| GS412 Tablets | | 300 | 68.5% |
| Promoter | palm oil | 5 | 1.1% |
| Layer 1 | palm wax | 30 | 6.8% |
| Layer 2 | EVA 4612 (reinforcement polymer) | 3 | 0.7% |
| Layer 3 | palm wax | 70 | 16% |
| | Sasol H1 (SPICA) | 30 | 6.8% |
| Total | | 438 | 100% |

### Example 13: SICIT 961 (not according to the invention)

This is a three-layer system with low-melting canalizing agent (manganese sulphate) at 2% in each layer with core constituted by 2.5-mm tablets (3000 g).

### Composition of layers applied

| ***SICIT 961*** | **Component** | **Quantity (g)** | **Quantity (%)** |
|---|---|---|---|
| Promoter | peanut oil | 25 | 1.6 |
| Layer 1 | synthetic Sasol wax C80 | 686 | 45.0 |
| | canalizing agent: manganese sulphate (2%) | 14 | 0.9 |
| Layer 2 | Crilat 1815 | 100 | 6.6 |
| Layer 3 | synthetic Sasol wax H1 | 686 | 45.0 |
| | canalizing agent: manganese sulphate (2%) | 14 | 0.9 |
| | blue wax colourant | 1 | 0.1 |
| Total | | 1526 | 100.0 |

### Process parameters for setting up SICIT 961 systems

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 60 | 50 | 100 | 15-20 | - 4 |
| Heating | 18 | 5 | 67 | 50 | 100 | 50 | - 4 |
| Promoter | 5 | 20 | 67 | 70 | 70 | 59 | - 4 |
| Melt coating | 60 | 20 | 65 | 70 | 70 | 70 | - 4 |
| Spray coating | 7 | 15 | 45 | 50 | 50 | 45 | - 2 |
| Drying | 10 | 15 | 45 | 70 | 70 | 39 | - 2 |
| Melt coating | 40 | 20 | 70 | 70 | 70 | 70 | - 4 |
| Cooling | 10 | 5 | 20 | 50 | 50 | 40 | - 4 |

### Example 14: SICIT 952 (not according to the invention)

This is a monolayer system with layered active ingredient in the form of powder (yeast, *Saccharomyces Cerevisiae* in powder form) at 5% in each layer, with core constituted by 2.5-mm tablets (3000 g).

### Composition of layers applied

| ***SICIT 952*** | **Component** | **Quantity (g)** | **Quantity (%)** |
|---|---|---|---|
| Promoter | peanut oil | 30 | 3.7 |
| Layer 1 | beeswax | 750 | 91.4 |
| | canalizing agent: yeast, *Saccharomyces Cerevisiae* powder (5%) | 40 | 4.9 |
| | green wax colourant | 1 | 0.1 |
| Total | | 821 | 100.0 |

### Process parameters for setting up the systems SICIT 952

| Process parameters | Durat. of step (min) | Rate of rotation (rpm) | Input-air temperature (°C) | Input-air flow rate (%) | Output-air flow rate (%) | Product temperature (°C) | Negative pressure of drum (mm H₂0) |
|---|---|---|---|---|---|---|---|
| Loading | 1 | 5 | 65 | 50 | 50 | 15-20 | - 4 |
| Heating | 20 | 15 | 65 | 50 | 100 | 42 | - 4 |
| Promoter | 5 | 15 | 53 | 50 | 100 | 48 | - 4 |
| Melt coating | 40 | 20 | 50 | 70 | 70 | 47 | - 4 |
| Cooling | 10 | 5 | 20 | 50 | 50 | 44 | - 1.3 |

### Analytical results and validation of the product

The first analytical approach is evaluation of the release in water of the various products. The results of the release in water of some non-canalized or canalized formulations (SICIT 61, SICIT 65) set in comparison with a slow-release commercial product (Osmocote Tablet NR) are illustrated in Figure 3.

Other results of release in water of with canalized formulations (SICIT 84 and SICIT 85) compared with a non-canalized formulation (SICIT 83) are illustrated in Figure 4.

The results appearing in the figures show how different canalizers lead to different profiles of release that can be modulated on the basis of the specific environmental requirements.

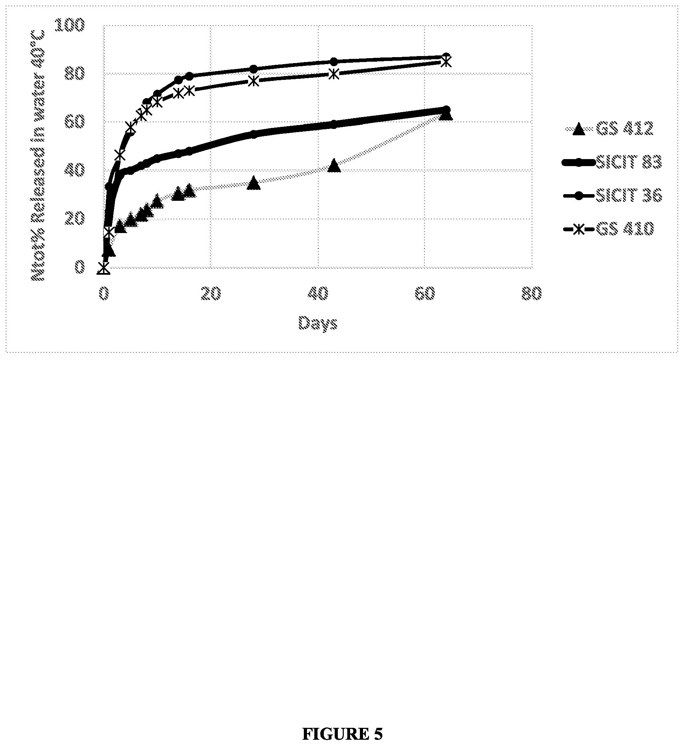

The results of a comparative study between the products GS412, SICTI 83, SICIT 36, and GS410 are given in the table below and represented in the graph of Figure 5.

Also here there may be noted evident differences between the behaviour of the canalized products and the non- canalized products (SICIT 83), and significantly between the canalizing agents that accelerate and the canalizing agents that delay release of the active ingredients. The (middle) curve corresponding to SICIT 83 represents the profile of release of a non-canalized product. The bottom curve (GS 412) highlights a slower release and is an example of a canalizing agent that delays release of the active ingredients, thus lengthening the times of effectiveness. The other two upper curves (SICIT 36 and GS 410) correspond to products in which the canalizing agents increase the rate of release, this given the same formulation, namely, three layers of the same materials.

| | **Percentage of release in water** | | | |
|---|---|---|---|---|
| **Days** | **GS 412** | **SICIT 83** | **SICIT 36** | **GS 410** |
| 0 | 0% | 0% | 0% | 0% |
| 1 | 8% | 23% | 33% | 15% |
| 3 | 18% | 38% | 46% | 47% |
| 5 | 20% | 40% | 56% | 58% |
| 7 | 22% | 42% | 64% | 63% |
| 8 | 24% | 43% | 68% | 65% |
| 10 | 28% | 45% | 72% | 68% |
| 14 | 31% | 47% | 78% | 72% |
| 16 | 32% | 48% | 79% | 73% |
| 28 | 35% | 55% | 82% | 77% |
| 43 | 42% | 59% | 85% | 80% |
| 64 | 64% | 65% | 87% | 85% |

## Claims

1. A coated product with controlled release, in water or in the soil, of soluble active ingredients of agronomic and agricultural interest, **characterized in that** it comprises a core consisting of or containing one or more active ingredients, said core being coated with at least one outer layer for control of release of the active ingredient or ingredients and a number "n" of additional coating layers, where "n" may be 0, 1, 2, 3, 4, or 5, and where at least one layer comprises one or more canalizing agents that determine the rate of release of the active ingredient or ingredients; wherein said canalizing agents are protein hydrolysates; and wherein said layer for control of release comprises a non-water-soluble or water-repellent low-melting material chosen from waxes.

2. The product according to Claim 1, **characterized in that** "n" is equal to 1 and **in that** the additional coating layer is a layer of smoothing/thickening of the core or is a mechanical-reinforcement layer or **characterized in that** "n" is equal to 2 and **in that** the additional coating layers are a mechanical-reinforcement layer and a layer of smoothing and/or thickening of the core underlying the reinforcement layer.

3. The product according to any one of the Claim 1 or 2, **characterized in that** the core is coated with a number of smoothing and/or thickening layers or mechanical-reinforcement layers or layers for control of release, which optionally alternate with one or more layers comprising active ingredients that are identical to one another or different from one another.

4. The product according to any one of the Claims 1 to 3, wherein the canalizing agent is present in quantities of between 0.5% and 10% (w/w), preferably between 1% and 5% (w/w) of the end product.

5. The product according to any one of the Claims 1 to 4, in the form of granulate or tablet or micro-tablet or pellet and/or **characterized in that** the core is in the form of granule, tablet, micro-tablet, or pellet.

6. The product according to any one of the Claims 2 to 5, **characterized in that** the smoothing/thickening layer comprises a non-water-soluble or water-repellent low-melting material chosen from waxes.

7. The product according to any one of the Claims 2 to 6, **characterized in that** the mechanical reinforcement layer comprises water-soluble or non-water-soluble polymers, and optionally additives chosen from among plasticising agents, anti-adherent agents, and canalizing agents.

8. The product according to any one of the Claims 1 to 7, wherein one or more active ingredients are chosen from among biostimulants, fertilisers, phytotherapeutic drugs, pesticides, fungicides, herbicides, plant hormones, growth factors, and enzymes.

9. The product according to any one of the Claims 1 to 8, wherein the active ingredient is a biostimulant chosen from among protein hydrolysates or mixtures of protein hydrolysates of vegetable or animal origin, peptides or oligopeptides, by-products of vegetable processing, micro-elements and macro-elements, phytostimulants, and micro-organisms.

10. The product according to any one of the Claims 1 to 9, comprising at least two different active ingredients, and/or wherein at least two active ingredients are included in the core or else one active ingredient is included in the material that forms one from among the smoothing layer, the reinforcement layer, or the layer for control of release or else one active ingredient forms an additional intermediate layer between the smoothing layer, the reinforcement layer, or the layer for control of release.

11. A process for preparing a product according to any one of the Claims 1 to 10, comprising at least the following steps:
heating the cores consisting of or comprising the active ingredient or ingredients;
coating the cores with a coating material in molten form;
cooling the cores thus coated;
repeating the entire cycle n times, with n ranging from 2 to 5, to obtain a granule with n+1 layers coating the core;
wherein the coating material of at least one layer coating the core contains protein hydrolysates as canalizing agent.

12. The process according to Claim 11, wherein for each cycle the coating material is the same as or different from the material laid in the previous cycle and/or wherein cycles of deposition of coating layers are alternated with cycles of deposition of layers consisting of or comprising the active ingredients.

13. The process according to any one of the Claims 11 or 12, comprising at least one of the following steps: step A, where the cores are coated with material that generates a smoothing/thickening layer; step B, where the cores are coated with material that generates a mechanical-reinforcement layer; or step C, where the cores are coated with material that generates a layer for control of release of the active ingredient or ingredients.

14. The process according to Claim 13, comprising step A and step C or step B and step C, or in sequence steps A, B, and C.

15. The process according to any one of the Claims 11 to 14, wherein at least one material used in steps A and/or B and/or C is a non-water-soluble low-melting material selected from fats, waxes, low-melting polymers, hydrogenated or non-hydrogenated oils or fats, protein hydrolysates and derivatised gelatins, and natural or synthetic paraffins, optionally comprising soluble or insoluble diluents.

16. Use of the product according to any one of Claims 1 to 10 for enhancing the yield and quality of crops and/or for enhancing the quality of the soils.

## Patentansprüche

1. Beschichtetes Produkt mit kontrollierter Freisetzung, im Wasser oder in dem Boden, löslicher Wirkstoffe von agronomischem und landwirtschaftlichem Interesse, **dadurch gekennzeichnet, dass** es einen Kern umfasst, der aus einem oder mehreren Wirkstoffen besteht oder diese enthält, wobei der Kern mit mindestens einer äußeren Schicht für eine Kontrolle einer Freisetzung des Wirkstoffs oder der Wirkstoffe und einer Anzahl "n" zusätzlicher Beschichtungsschichten beschichtet wird, wobei "n" 0, 1, 2, 3, 4 oder 5 sein kann, und wobei mindestens eine Schicht ein oder mehrere Kanalisierungsmittel umfasst, die die Freisetzungsrate des Wirkstoffs oder der Wirkstoffe bestimmen; wobei die Kanalisierungsmittel Proteinhydrolysate sind; und
wobei die Schicht für die Kontrolle der Freisetzung ein nicht wasserlösliches oder wasserabweisendes Material mit niedrigem Schmelzpunkt umfasst, das aus Wachsen ausgewählt ist.

2. Produkt nach Anspruch 1, **dadurch gekennzeichnet, dass** "n" gleich 1 ist und dass die zusätzliche Beschichtungsschicht eine Schicht zum Glätten/Verdicken des Kerns ist oder eine Schicht mit mechanischer Verstärkung ist oder **dadurch gekennzeichnet, dass** "n" gleich 2 ist und die zusätzlichen Beschichtungsschichten eine Schicht mit mechanischer Verstärkung und eine Schicht zum Glätten und/oder Verdicken des Kerns sind, der unter der Verstärkungsschicht liegt.

3. Produkt nach einem der Ansprüche 1 oder 2,
**dadurch gekennzeichnet, dass** der Kern mit mehreren glättenden und/oder verdickenden Schichten oder Schichten mit mechanischer Verstärkung oder Schichten für die Kontrolle der Freisetzung beschichtet ist, die sich optional mit einer oder mehreren Schichten abwechseln, umfassend Wirkstoffe, die einander identisch sind oder sich voneinander unterscheiden.

4. Produkt nach einem der Ansprüche 1 bis 3, wobei das Kanalisierungsmittel in Mengen zwischen 0,5 % und 10 % (Gew./Gew.), vorzugsweise zwischen 1 % und 5 % (Gew./Gew.) des Endprodukts vorhanden ist.

5. Produkt nach einem der Ansprüche 1 bis 4, in Form eines Granulats oder einer Tablette oder einer Mikrotablette oder eines Pellets und/oder
**dadurch gekennzeichnet, dass** der Kern die Form eines Granulats, einer Tablette, einer Mikrotablette oder eines Pellets hat.

6. Produkt nach einem der Ansprüche 2 bis 5, **dadurch gekennzeichnet, dass** die Glättungs-/Verdickungsschicht ein nicht wasserlösliches oder wasserabweisendes Material mit niedrigem Schmelzpunkt umfasst, das aus Wachsen ausgewählt ist.

7. Produkt nach einem der Ansprüche 2 bis 6,
**dadurch gekennzeichnet, dass** die Schicht mit mechanischer Verstärkung wasserlösliche oder nicht wasserlösliche Polymere umfasst und optional Additive, die aus Weichmachern, Antihaftmitteln und Kanalisierungsmitteln ausgewählt sind.

8. Produkt nach einem der Ansprüche 1 bis 7, wobei ein oder mehrere Wirkstoffe aus Biostimulanzien, Düngemitteln, Phytotherapeutika, Pestiziden, Fungiziden, Herbiziden, Pflanzenhormonen, Wachstumsfaktoren und Enzymen ausgewählt sind.

9. Produkt nach einem der Ansprüche 1 bis 8, wobei der Wirkstoff ein Biostimulans ist, der aus Proteinhydrolysaten oder Mischungen von Proteinhydrolysaten pflanzlichen oder tierischen Ursprungs, Peptiden oder Oligopeptiden, Nebenprodukten einer Gemüseverarbeitung, Mikroelementen und Makroelementen, Phytostimulanzien und Mikroorganismen ausgewählt ist.

10. Produkt nach einem der Ansprüche 1 bis 9, umfassend mindestens zwei unterschiedliche Wirkstoffe, und/oder wobei mindestens zwei Wirkstoffe in dem Kern eingeschlossen sind oder ein Wirkstoff in dem Material eingeschlossen ist, das eines von der Glättungsschicht, der Verstärkungsschicht oder der Schicht für die Kontrolle der Freisetzung ausbildet oder sonst ein Wirkstoff eine zusätzliche Zwischenschicht zwischen der Glättungsschicht, der Verstärkungsschicht oder der Schicht für die Kontrolle der Freisetzung ausbildet.

11. Verfahren zum Herstellen eines Produkts nach einem der Ansprüche 1 bis 10, umfassend mindestens die folgenden Schritte:
Erhitzen der Kerne, die aus dem Wirkstoff oder den Wirkstoffen bestehen oder diese umfassen;
Beschichten der Kerne mit einem Beschichtungsmaterial in geschmolzener Form;
Abkühlen der auf diese Weise beschichteten Kerne;
Wiederholen des gesamten Zyklus n-mal, wobei n zwischen 2 und 5 liegt, um ein Korn mit n+1 Schichten zu erhalten, die den Kern beschichten;
wobei das Beschichtungsmaterial mindestens einer Schicht, die den Kern beschichtet, Proteinhydrolysate als Kanalisierungsmittel enthält.

12. Verfahren nach Anspruch 11, wobei für jeden Zyklus das Beschichtungsmaterial das gleiche oder ein unterschiedliches als das Material ist, das in dem vorhergehenden Zyklus aufgetragen wird, und/oder wobei Zyklen einer Aufbringung von Beschichtungsschichten mit Zyklen der Aufbringung von Schichten abwechseln, die aus den Wirkstoffen bestehen oder diese umfassen.

13. Verfahren nach einem der Ansprüche 11 oder 12, umfassend mindestens einen der folgenden Schritte: Schritt A, bei dem die Kerne mit Material beschichtet werden, das eine Glättungs-/Verdickungsschicht erzeugt; Schritt B, bei dem die Kerne mit Material beschichtet werden, das eine Schicht mit mechanischer Verstärkung erzeugt; oder Schritt C, bei dem die Kerne mit einem Material beschichtet werden, das eine Schicht für die Kontrolle der Freigabe des Wirkstoffs oder der Wirkstoffe erzeugt.

14. Verfahren nach Anspruch 13, umfassend Schritt A und Schritt C oder Schritt B und Schritt C oder nacheinander die Schritte A, B und C.

15. Verfahren nach einem der Ansprüche 11 bis 14, wobei mindestens ein Material, das in den Schritten A und/oder B und/oder C verwendet wird, ein nicht wasserlösliches, niedrig schmelzendes Material ist, das aus Fetten, Wachsen, niedrig schmelzenden Polymeren, hydrierten oder nicht hydrierten Ölen oder Fetten, Proteinhydrolysaten und derivatisierten Gelatinen und natürlichen oder synthetischen Paraffinen, optional umfassend lösliche oder unlösliche Verdünnungsmittel, ausgewählt ist.

16. Verwendung des Produkts nach einem der Ansprüche 1 bis 10 zum Verbessern des Ertrags und der Qualität von Nutzpflanzen und/oder zum Verbessern der Qualität des Erdbodens.

## Revendications

1. Produit revêtu avec libération contrôlée, dans l'eau ou dans la terre, d'ingrédients actifs solubles d'intérêt agronomique et agricole, **caractérisé en ce qu'**il comprend un coeur constitué par ou contenant un ou plusieurs ingrédients actifs, ledit coeur étant revêtu d'au moins une couche externe pour le contrôle de libération de l'ingrédient ou des ingrédients actif(s) et un nombre « n » de couches de revêtement supplémentaires, où « n » peut être 0, 1, 2, 3, 4 ou 5, et où au moins une couche comprend un ou plusieurs agents de canalisation qui déterminent le taux de libération de l'ingrédient ou des ingrédients actif(s) ; dans lequel lesdits agents de canalisation sont des hydrolysats de protéine ; et
dans lequel ladite couche pour le contrôle de libération comprend un matériau à bas point de fusion non hydrosoluble ou hydrofuge, choisi parmi des cires.

2. Produit selon la revendication 1, **caractérisé en ce que** « n » est égal à 1 et **en ce que** la couche de revêtement supplémentaire est une couche de lissage/épaississement du coeur ou est une couche de renforcement mécanique ou **caractérisé en ce que** « n » est égal à 2 et **en ce que** les couches de revêtement supplémentaires sont une couche de renforcement mécanique et une couche de lissage et/ou d'épaississement du coeur se trouvant sous la couche de renforcement.

3. Produit selon l'un quelconque de la revendication 1 ou 2,
**caractérisé en ce que** le coeur est revêtu d'un certain nombre de couches de lissage et/ou d'épaississement ou de couches de renforcement mécanique ou de couches pour le contrôle de libération, qui alternent facultativement avec une ou plusieurs couches comprenant des ingrédients actifs, qui sont identiques les unes aux autres ou différentes les unes des autres.

4. Produit selon l'une quelconque des revendications 1 à 3, dans lequel l'agent de canalisation est présent en des quantités comprises entre 0,5 % et 10 % (en poids), de préférence entre 1 % et 5 % (en poids) du produit final.

5. Produit selon l'une quelconque des revendications 1 à 4, sous la forme de granulé ou de tablette ou de micro-tablette ou de pastille et/ou
**caractérisé en ce que** le coeur est sous la forme de granule, de tablette, de micro-tablette ou de pastille.

6. Produit selon l'une quelconque des revendications 2 à 5,
**caractérisé en ce que** la couche de lissage/épaississement comprend un matériau à bas point de fusion non hydrosoluble ou hydrofuge, choisi parmi des cires.

7. Produit selon l'une quelconque des revendications 2 à 6,
**caractérisé en ce que** la couche de renforcement mécanique comprend des polymères hydrosolubles ou non hydrosolubles, et facultativement des additifs choisis parmi agents plastifiants, agents anti-adhérents et agents de canalisation.

8. Produit selon l'une quelconque des revendications 1 à 7, dans lequel un ou plusieurs ingrédients actifs sont choisis parmi biostimulants, engrais, médicaments phytothérapeutiques, pesticides, fongicides, herbicides, hormones végétales, facteurs de croissance et enzymes.

9. Produit selon l'une quelconque des revendications 1 à 8, dans lequel l'ingrédient actif est un biostimulant choisi parmi hydrolysats de protéine ou mélanges d'hydrolysats de protéine d'origine végétale ou animale, peptides ou oligopeptides, sous-produits de traitement de végétaux, micro-éléments et macro-éléments, phytostimulants et micro-organismes.

10. Produit selon l'une quelconque des revendications 1 à 9, comprenant au moins deux ingrédients actifs différents, et/ou dans lequel au moins deux ingrédients actifs sont inclus dans le coeur ou bien un ingrédient actif est inclus dans le matériau qui forme l'une parmi la couche de lissage, la couche de renforcement ou la couche pour le contrôle de libération ou bien un ingrédient actif forme une couche intermédiaire supplémentaire entre la couche de lissage, la couche de renforcement ou la couche pour le contrôle de libération.

11. Procédé permettant de préparer un produit selon l'une quelconque des revendications 1 à 10, comprenant au moins les étapes suivantes :
chauffage des coeurs constitués par, ou comprenant, l'ingrédient ou les ingrédients actif(s) ;
revêtement des coeurs avec un matériau de revêtement sous forme fondue ;
refroidissement des coeurs ainsi revêtus ;
répétition du cycle entier n fois, avec n allant de 2 à 5, pour obtenir un granule avec n+1 couches revêtant le coeur ;
dans lequel le matériau de revêtement d'au moins une couche revêtant le coeur contient des hydrolysats de protéine en guise d'agent de canalisation.

12. Procédé selon la revendication 11, dans lequel pour chaque cycle le matériau de revêtement est identique au, ou différent du, matériau posé dans le cycle précédent et/ou dans lequel des cycles de dépôt de couches de revêtement alternent avec des cycles de dépôt de couches constituées par, ou comprenant, les ingrédients actifs.

13. Procédé selon l'une quelconque des revendications 11 ou 12, comprenant au moins l'une des étapes suivantes : étape A, où les coeurs sont revêtus d'un matériau qui génère une couche de lissage/épaississement ; étape B, où les coeurs sont revêtus d'un matériau qui génère une couche de renforcement mécanique ; ou étape C, où les coeurs sont revêtus d'un matériau qui génère une couche pour le contrôle de libération de l'ingrédient ou des ingrédients actif(s).

14. Procédé selon la revendication 13, comprenant l'étape A et l'étape C ou l'étape B et l'étape C, ou en séquence les étapes A, B et C.

15. Procédé selon l'une quelconque des revendications 11 à 14, dans lequel au moins un matériau utilisé aux étapes A et/ou B et/ou C est un matériau à bas point de fusion non hydrosoluble choisi parmi graisses, cires, polymères à bas point de fusion, huiles ou graisses hydrogénées ou non hydrogénées, hydrolysats de protéine et gélatines dérivatisées, et paraffines naturelles ou synthétiques, comprenant facultativement des diluants solubles ou insolubles.

16. Utilisation du produit selon l'une quelconque des revendications 1 à 10 pour améliorer le rendement et la qualité de cultures et/ou pour améliorer la qualité des sols.
